# EUROPEAN PATENT APPLICATION

(11) **EP 2 433 705 A1**
(43) Date of publication of application: **28.03.2012**
(21) Application number: 11172742.6
(22) Date of filing: 05.07.2011
(51) Int. Cl.: B01F 3/04, C02F 1/467

(54) **Producing apparatus and producing method of hypochlorous acid water**

(30) Priority: 24.09.2010 JP 2010213180
(71) Applicant: Dairy Techno Inc., Minato-ku Tokyo 105-0014 (JP)
(72) Inventor: Tomita, Mamoru, Tokyo, 105-0014 (JP); Tomita, Yukihiro, Tokyo, 105-0014 (JP)
(74) Representative: Kronthaler, Wolfgang N.K.

(57) **Abstract**

In a producing apparatus and a producing method of effectively and safely producing hypochlorous acid water suitable for sterilization in a desired amount of production and in a desired concentration, the producing apparatus is compact and includes an electrolytic vessel (1) to which dilute hydrochloric acid is supplied and in which no diaphragm exists between an anode (10a) and a cathode (10b) for generating a chlorine gas, a storage tank (5) in which water is stored, a circulation pipe (6) into which water flows from the storage tank (5), in which the water circulates, and from which the water returns into the storage tank (5), and a mixing pipe (8) which couples between the electrolytic vessel (1) and the circulation pipe (6), mixes the chlorine gas from the electrolytic vessel (1) with the water in the circulation pipe (6), and produces hypochlorous acid water.

## Description

### BACKGROUND OF THE INVENTION

### 1. Field of the Invention

The invention relates to a producing apparatus and a producing method of hypochlorous acid water that is effective as sterilizing water.

### 2. Description of the Related Art

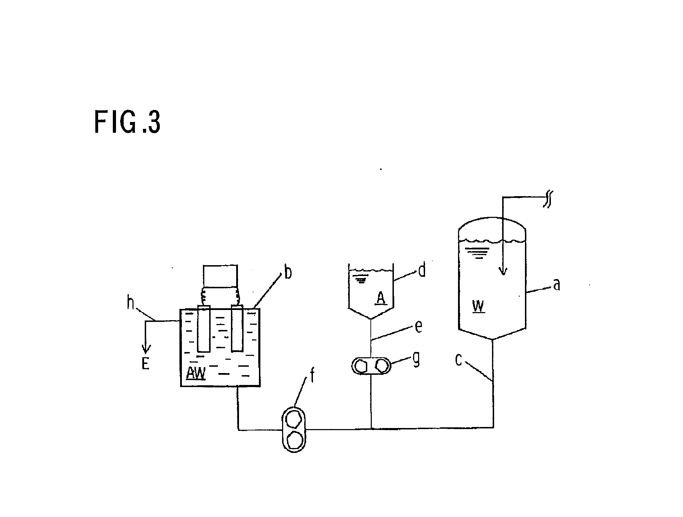

As shown in FIG. 3, there is known, as a conventional producing apparatus of hypochlorous acid water, a producing apparatus constructed such that a raw water feed pipe c is connected from a raw water tank a to an electrolytic vessel b in which no diaphragm exists between an anode and a cathode, and a hydrochloric acid feed pipe e from a hydrochloric acid tank d is connected in communication with the raw water feed pipe c, and hypochlorous acid water having a desired concentration is obtained in the electrolytic vessel b (refer to Jpn. Pat. Appln. KOKAI Publication No. 10-128336).

Note that, in FIG. 3, symbol f shows a raw water pump interposed in the raw water feed pipe c, symbol g shows a hydrochloric acid metering pump interposed in the hydrochloric acid feed pipe e, and symbol h shows a discharge pipe of an electrolytically treated liquid from the electrolytic vessel b.

The conventional hypochlorous acid water producing apparatus has the following problems.

(1) Since the amount of hypochlorous acid water that can be produced in the electrolytic vessel b is small, the size of the electrolytic vessel b must be enlarged to produce hypochlorous acid water in a necessary amount and further a large amount of electric power is also used, in result, there is a problem of an increase of cost.

(2) To produce hypochlorous acid water having a high concentration in the electrolytic vessel b, since a considerable amount of voltage and current are necessary in conformity with a desired concentration, there is a problem of economy and safety.

(3) Since the amount of hypochlorous acid water that can be produced in the electrolytic vessel b is small, it is difficult to adjust the hypochlorous acid water to a predetermined concentration, and, it is also difficult to adjust hypochlorous acid water so that it has a high concentration and a system is necessary to control the concentration, from which a problem arises in that cost is increased.

(4) There is a problem in that it is difficult to adjust the pH of hypochlorous acid water to be produced depending on the quality of raw water being used, in particular depending on the hardness of raw water.

(5) There is a problem in that when raw water being used contains a large amount of organic matters, it is difficult to keep hypochlorous acid in hypochlorous acid water to a predetermined concentration.

(6) There is also a problem in that since the amount of hypochlorous acid water produced in the electrolytic vessel b is small, it is difficult to produce hypochlorous acid water having a high concentration of 100 ppm or more.

An object of the invention is to provide a producing apparatus and a producing method of hypochlorous acid water that can overcome the problems and obtain hypochlorous acid water having a desired amount of production and a desired concentration.

### SUMMARY OF THE INVENTION

To achieve the object, a first invention relates to a producing apparatus which includes an electrolytic vessel to which dilute hydrochloric acid is supplied and in which no diaphragm exists between an anode and a cathode for generating a chlorine gas, a storage tank in which water is stored, a circulation pipe into which water flows from the storage tank, in which the water circulates, and from which the water returns into the storage tank,and a mixing pipe which couples between the electrolytic vessel and the circulation pipe, mixes the chlorine gas from the electrolytic vessel with the water in the circulation pipe, and produces hyprochlorous acid water,and, a second invention relates to a producing method which includes a step of generating a chlorine gas by subjecting dilute hydrochloric acid being supplied to an electrolytic treatment in an electrolytic vessel in which no diaphragm exists between an anode and a cathode, and a step of producing hypochlorous acid water having a desired amount of production and a desired concentration by injecting the chlorine gas into the water that circulates in the circulation pipe.

According to the invention, the electrolytic vessel can be made compact and further hypochlorous acid water having a desired concentration can be gradually produced easily by circulating the water in the storage tank until the desired concentration is reached in the same electrolytic vessel and under the same electrolytic condition. Further, hypochlorous acid water having a high concentration can be also produced. According to the method of the invention, anyone can produce hypochlorous acid water having a desired amount of production and a desired concentration simply, easily, safely, and economically.

### BRIEF DESCRIPTION OF THE DRAWINGS

FIG. 1 is a piping diagram of an embodiment of a hypochlorous acid water producing apparatus of the invention;
FIG. 2 is a piping diagram of another embodiment of the hypochlorous acid water producing apparatus of the invention; and
FIG. 3 is a piping diagram of a conventional hypochlorous acid water producing apparatus.

### DESCRIPTION OF THE PREFERRED EMBODIMENTS

Embodiments of a mode for carrying out the invention will be shown below. Embodiment 1

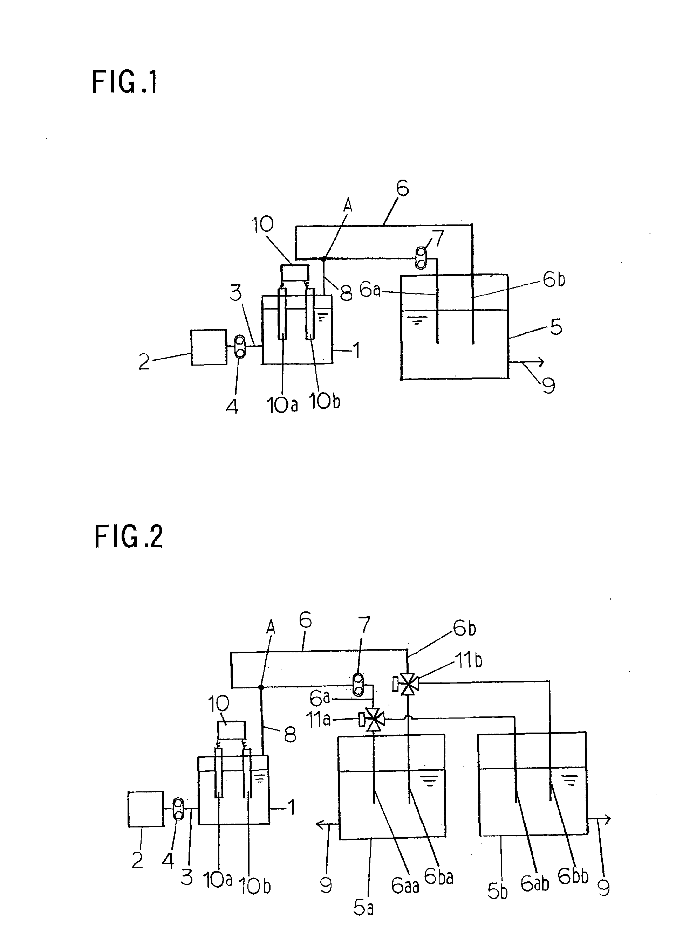

An embodiment 1 of a hypochlorous acid water producing apparatus of the invention will be explained referring to FIG. 1.

In FIG. 1, reference numeral 1 shows an electrolytic vessel, and the electrolytic vessel 1 has an anode 10a and a cathode 10b which are disposed in the electrolytic vessel 1 and between which no diaphragm exists.

Reference numeral 2 shows a dilute hydrochloric acid tank, a water feed pipe 3 is coupled between the dilute hydrochloric acid tank 2 and the electrolytic vessel 1, and, a dilute hydrochloric acid pump 4 is interposed in the water feed pipe 3 and the dilute hydrochloric acid in the dilute hydrochloric acid tank 2 is supplied to the electrolytic vessel 1 by driving the dilute hydrochloric acid pump 4.

Reference numeral 5 shows a storage tank, 6 shows a circulation pipe, a flow-in pipe portion 6a and a flow-out pipe portion 6b of the circulation pipe 6 are connected to the storage tank 5, and, a circulation pump 7 is interposed to an intermediate portion of the circulation pipe 6, and the water in the storage tank 5 flows from the flow-in pipe portion 6a into the circulation pipe 6, flows in the circulation pipe 6 and flows out from the flow-out pipe portion 6b into the storage tank 5 so that water or hypochlorous acid water circulates in the circulation pipe 6.

Reference numeral 8 shows a mixing pipe, an end of the mixing pipe 8 is connected to the electrolytic vessel 1, and, the other end thereof is connected to a mixing portion A of the intermediate portion of the circulation pipe 6, and the chlorine gas generated in the electrolytic vessel 1 is mixed with the water which flows in the circulation pipe 6 via the mixing pipe 8, thereby hypochlorous acid water is produced.

Reference numeral 9 shows a discharge pipe of hypochlorous acid water, and 10 shows a power supply of the anode 10a and the cathode 10b.

Further, the storage tank 5 has a discharge port (not shown) for discharging the hydrogen gas generated in the electrolytic vessel 1 to the outside.

Next, a producing method of the hypochlorous acid water produced by the apparatus of the embodiment and an effect of the producing method will be explained.

The dilute hydrochloric acid in the dilute hydrochloric acid tank 2 is supplied into the electrolytic vessel 1 by driving the dilute hydrochloric acid pump 4.

Then, in the electrolytic vessel 1, the dilute hydrochloric acid is continuously subjected to an electrolytic treatment by energizing both the anode 10a and the cathode 10b dipped into the dilute hydrochloric acid, thereby generating a chlorine gas.

In contrast, the water in the storage tank 5 is circulated and flown in the circulation pipe 6 by driving the circulation pump 7.

Then, the chlorine gas flows in the mixing pipe 8, is mixed with the water, which flows in the circulation pipe 6, at the mixing portion A, and produces hypochlorous acid water which is stored in the storage tank 5 while being produced.

At an initial time, although the hypochlorous acid water has a low concentration, the hypochlorous acid water gradually becomes hypochlorous acid water having a high concentration by being mixed with the chlorine gas while repeatedly circulating in the circulation pipe 6. The producing apparatus is continuously operated until the hypochlorous acid water in the storage tank 5 has a desired concentration.

As described above, since the producing apparatus employs the system for mixing the hypochlorous acid water with the chlorine gas while circulating the hypochlorous acid water, even if the electrolytic vessel 1 is compact and the anode 10a and the cathode 10b are energized with a low current, hypochlorous acid water having a desired high concentration can be obtained.

Note that the hypochlorous acid water produced in the storage tank 5 has pH of 2. 0 or more to 7. 0 or less and preferably has pH of 5.0 or more to 6.5 or less than.

Further, the hypochlorous acid water has a concentration of 2 ppm or more and preferably has a concentration of 10 - 600 ppm.

According to the method of the embodiment, since the generated chlorine gas is circulated while being repeatedly mixed with the circulating water or hypochlorous acid water, hypochlorous acid water having a low concentration of 2 ppm to hypochlorous acid water having a high concentration of 600 ppm to about 1000 ppm can be produced.

Further, hypochlorous acid water having an optional concentration can be produced from a small amount to a large amount by variously adjusting the capacity of the storage tank 5, the circulation amount or the circulation time of the liquid in the circulation pipe 6, or the amount of the chlorine gas generated in the electrolytic vessel 1.

Further, when the water in the storage tank is soft water or contains organic matters, hypochlorous acid water in a preferable range of pH can be easily obtained by neutralizing the water by mixing an alkaline pH adjuster containing Ca, Mg, Na, K, and the like with the water in the storage tank, and, hypochlorous acid water in the preferable range of pH can be easily obtained by replenishing hypochlorous acid in the amount consumed by the organic matters.

### Embodiment 2

An embodiment 2 of the hypochlorous acid water producing apparatus of the invention will be explained referring to FIG. 2.

In the embodiment 2, a first storage tank 5a and a second storage tank 5b are installed, the flow-in pipe portion 6a of the circulation pipe 6 is branched to a first flow-in branch pipe portion 6aa and a second flow-in branch pipe portion 6ab, and, the flow-out pipe portion 6b of the circulation pipe 6 is branched to a first flow-out branch pipe portion 6ba and a second flow-out branch pipe portion 6bb, the first flow-in branch pipe portion 6aa and the first flow-out branch pipe portion 6ba are connected to the first storage tank 5a, and, the second flow-in branch pipe portion 6ab and the second flow-out branch pipe portion 6bb are connected to the second storage tank 5b, further, switch valves 11a, 11b are interposed to a branch portion of the flow-in pipe portion 6a and a branch portion of the flow-out pipe portion 6b, respectively, the switch valves 11a, 11b are switched to the first flow-in branch pipe portion 6aa and the first flow-out branch pipe portion 6ba, and the water in the first storage tank 5a is circulated as in the embodiment 1. When hypochlorous acid water having a desired concentration is produced in the first storage tank 5a, the switch valve 11a, 11b are switched to the second flow-in branch pipe portion 6ab and the second flow-out branch pipe portion 6bb, the water in the second storage tank 5b is circulated as in the embodiment 1 so as to be made to hypochlorous acid water having the desired concentration in the second storage tank 5b. Thus, while hypochlorous acid water having a desired concentration is produced in the one of the storage tanks, the hypochlorous acid water which is already produced in the other storage tank and has the desired concentration can be used. Accordingly, hypochlorous acid water can be continuously produced and used by alternately using both the tanks.

Note that, in the embodiment 2, although the example, in which the two storage tanks are used, is shown, three or more storage tanks may be installed as necessary and the flow-in branch pipe portions and the flow-out branch pipe portions may be connected to the respective storage tanks.

The producing apparatus and the producing method of hypochlorous acid water of the invention are used in food factory, chicken farm, milking farm, agricultural farm, medical and nursing care facility, restaurant, and the like.

## Claims

1. A producing apparatus of hypochlorous acid water, comprising an electrolytic vessel to which dilute hydrochloric acid is supplied and in which no diaphragm exists between an anode and a cathode for generating a chlorine gas;
a storage tank in which water is stored;
a circulation pipe into which water flows from the storage tank, in which the water circulates, and from which the water returns into the storage tank; and a mixing pipe which couples between the electrolytic vessel and the circulation pipe, mixes the chlorine gas from the electrolytic vessel with the water in the circulation pipe, and produce hypochlorous acid water.

2. The producing apparatus of hypochlorous acid water according to Claim 1, wherein:
a plurality of the storage tanks are provided;
a flow-in pipe portion of the circulation pipe is branched to a plurality of flow-in branch pipe portions, and, a flow-out pipe portion of the circulation pipe is branched to a plurality of flow-out branch pipe portions; the respective flow-in branch pipe portions and the respective flow-out branch pipe portions are connected in the respective storage tanks; and switch valves are interposed to branch portions of the flow-in pipe portion and the flow-out pipe portion.

3. A producing method of hypochlorous acid water comprising:
a step of generating a chlorine gas by subjecting dilute hydrochloric acid being supplied to an electrolytic treatment in an electrolytic vessel in which no diaphragm exists between an anode and a cathode; and
a step of producing hypochlorous acid water having a desired amount of production and a desired concentration by injecting the chlorine gas into the water circulating in the circulation pipe.

4. A producing method of hypochlorous acid water comprising:
a step of generating chlorine gas by continuously subjecting dilute hydrochloric acid being supplied to an electrolytic treatment in an electrolytic vessel in which no diaphragm exists between an anode and a cathode;
a step of producing hypochlorous acid water by mixing the chlorine gas with the water in a circulation pipe into which water flows from inside of a storage tank, in which a desired amount of water is stored, in which the water circulates, and from which the water returns into the storage tank; and
a step of producing hypochlorous acid water having a desired amount of production and a desired concentration by gradually increasing the concentration of the hypochlorous acid water in the storage tank.
